# FASCICULE DE BREVET EUROPEEN

(11) **EP 4 228 969 B1**
(45) Date de publication et mention de la délivrance du brevet: **25.06.2025**
(21) Numéro de dépôt: 21807176.9
(22) Date de dépôt: 15.10.2021
(51) Int. Cl.: B64D 11/02

(54) **VANNE DE VIDANGE POUR AERONEF ET PROCEDE ASSOCIE**
ABLASSVENTIL FÜR LUFTFAHRZEUGE UND ENTSPRECHENDES VERFAHREN
DRAIN VALVE FOR AIRCRAFT AND CORRESPONDING METHOD

(30) Priorité: 15.10.2020 FR 2010536
(43) Date de publication de la demande: 23.08.2023
(73) Titulaire: Safran Aerosystems Fluid, 77111 Soignolles en Brie (FR)
(72) Inventeur: SINDEZINGUE, Denis, 77550 MOISSY-CRAMAYEL (FR); COSOLETO, David, 77550 MOISSY-CRAMAYEL (FR); BOURBON, Patrick, 77550 MOISSY-CRAMAYEL (FR)
(74) Mandataire: Gevers & Orès
(86) Numéro de dépôt international: PCT/FR2021/051803
(87) Numéro de publication internationale: WO 2022/079398

(56) Documents cités:
- FR-A1- 2 561 744
- US-A- 4 098 427
- US-A- 4 690 296
- US-A- 5 237 709
- US-A- 5 246 131
- US-A- 5 535 784

## Description

### Domaine technique de l'invention

L'invention concerne le domaine technique des vannes de vidange pour aéronef.

Plus particulièrement, l'invention concerne le domaine technique des vannes de vidange à double clapet pour aéronef.

### Arrière-plan technique

L'état de la technique est illustré par les documents US-A1-4 690 296 et US-A1-5 237 709.

Les aéronefs sont typiquement équipés d'un réservoir qui permet de collecter les eaux usées pendant le vol. Les eaux usées sont ensuite évacuées après l'atterrissage de l'aéronef.

A cet effet, l'aéronef est équipé d'une vanne de vidange agencée sur le fuselage de l'aéronef. Les eaux usées s'écoulent du réservoir à travers la vanne de vidange par gravité, ou par aspiration et sont collectées dans un dispositif de collecte des eaux usées.

La vanne de vidange permet d'ouvrir le réservoir et d'autoriser la vidange de ce dernier lors de l'entretien de l'aéronef, après son atterrissage. Elle permet par ailleurs de fermer le réservoir lorsque l'aéronef est en opération.

Généralement, la vanne de vidange comprend un corps cylindrique présentant un orifice d'entrée et un orifice de sortie. L'orifice d'entrée est en communication fluidique avec le réservoir et l'orifice de sortie est destiné à recevoir un dispositif de collecte des eaux usées et éventuellement d'aspiration pour effectuer la vidange du réservoir.

Par ailleurs, afin d'assurer l'étanchéité de la vanne, cette dernière comprend un premier clapet et un second clapet qui est agencé à l'intérieur du corps de la vanne. Les clapets sont mobiles en rotation entre une position d'ouverture et de fermeture. Lorsque les clapets sont en position d'ouverture, la vidange du réservoir peut être réalisée au travers de la vanne tandis qu'en position de fermeture des clapets, la vanne empêche la sortie des eaux usées du réservoir.

Le second clapet est directement en contact avec les eaux usées et constitue ainsi la première barrière d'étanchéité de la vanne. Le premier clapet permet de renforcer l'étanchéité de la vanne et constitue ainsi une deuxième barrière d'étanchéité de la vanne.

Par conséquent, la fermeture du second clapet est particulièrement importante dans la conception de la vanne de vidange. En effet, une mauvaise fermeture du second clapet peut entrainer une fuite des eaux usées au travers du second clapet. Les eaux usées peuvent ainsi s'accumuler dans l'espace délimité entre le premier et le second clapet. La simple ouverture du premier clapet conduit dans ce cas à la fuite des eaux usées au travers de la vanne, avant que le dispositif de collecte et éventuellement d'aspiration des eaux ne puisse être mis en place.

A cet effet, le document US-A-5 246 131 propose une vanne de vidange pour un aéronef comprenant un corps cylindrique, un premier clapet et un second clapet qui est agencé dans le corps cylindrique et un mécanisme de verrouillage du second clapet en position fermée. Le mécanisme de verrouillage du second clapet comprend une interface agencée sur le second clapet et un moyen d'entrainement en rotation d'un levier monté autour d'un axe. En position de fermeture du clapet, l'interface s'engage dans le moyen d'entrainement et verrouille le second clapet. Lors de l'ouverture, le levier est entrainé en rotation pour libérer l'interface.

Un tel mécanisme de verrouillage ne procure pas entière satisfaction. En effet, des dépôts provenant des eaux usées peuvent s'accumuler et gêner le mécanisme de verrouillage du second clapet. Dans un tel cas, rien ne permet à l'opérateur de s'assurer que l'interface est bien engagée dans le système d'entrainement et que le second clapet est donc correctement verrouillé. Une défaillance du mécanisme de verrouillage du second clapet n'est donc pas détectable dans une telle vanne.

Par conséquent, il existe un besoin de fournir une vanne de vidange présentant un mécanisme de verrouillage du second clapet fiable.

### Résumé de l'invention

A cet effet, l'invention propose une vanne de vidange pour aéronef selon la revendication 1.

La vanne de vidange selon l'invention comprend donc un mécanisme de verrouillage du second clapet en position fermée comprenant un levier de commande mobile en rotation entre une position de verrouillage et de déverrouillage. Dans la position déverrouillée, l'interface est en butée contre le dispositif d'entrainement et dans la position de verrouillage, l'interface est engagée dans le dispositif d'entrainement. Le déplacement en rotation du levier de commande entre ces deux positions est visible par l'opérateur et confirme ainsi que le second clapet est bien fermé et verrouillé. Ainsi, lors de la fermeture du second clapet, l'absence d'un second mouvement de rotation du levier de commande alerte l'opérateur sur une absence correcte de verrouillage du second clapet. La vanne présente ainsi un mécanisme de verrouillage du second clapet fiable.

La vanne selon l'invention peut comprendre une ou plusieurs des caractéristiques suivantes, prises isolément les unes des autres ou en combinaison les unes avec les autres :
- le troisième axe est agencé dans une paroi montée sur le corps cylindrique de la vanne à l'opposé du premier et du second axes par rapport à un axe longitudinal du corps cylindrique,
- un levier principal s'étendant sur le premier clapet apte à entrainer le premier clapet et le second clapet de la position ouverte à la position fermée,
- la bague présente une surface interne apte à entrer en butée avec une surface complémentaire de l'interface lors de l'ouverture du second clapet, la surface interne étant reliée à une surface externe de la bague par une arrête formant l'extrémité pointue,
- le levier de commande est mobile en rotation dans la position de déverrouillage selon une première direction et dans la position de verrouillage selon une seconde direction opposée à la première direction.

L'invention concerne également un procédé de verrouillage d'un second clapet d'une vanne selon l'une des caractéristiques ci-dessus, comprenant les étapes suivantes :
(a') fermer le second clapet,
(b') entrainer en rotation le levier de commande dans la position de déverrouillage dans laquelle l'interface est en butée contre le dispositif d'entrainement,
(c') entrainer en rotation le levier de commande dans la position de verrouillage dans laquelle l'interface est engagée dans le dispositif d'entrainement.

L'invention concerne également un aéronef comprenant au moins une vanne selon l'une quelconque des caractéristiques exposées ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue en perspective d'une vanne avec un dispositif d'entrainement non-revendiqué en position ouverte ;
[Fig.2] la figure 2 est une vue en perspective simplifiée de la vanne selon la figure 1 en position fermée ;
[Fig.3] la figure 3 est une vue agrandie de côté du dispositif d'entrainement du mécanisme de verrouillage de ladite vanne
[Fig.4] la figure 4 est une vue agrandie de côté du dispositif d'entrainement du mécanisme de verrouillage de la vanne selon un premier exemple de réalisation ;
[Fig.5] la figure 5 est une vue agrandie de côté du dispositif d'entrainement du mécanisme de verrouillage d'une vanne non-revendiquée
[Fig.6] la figure 6 est une vue de dessus d'un élément pouvant équiper la vanne selon l'invention ;
[Fig.7] la figure 7 est une vue agrandie de côté du dispositif d'entrainement du mécanisme de verrouillage de la vanne selon un deuxième exemple de réalisation ;
[Fig.8] la figure 8 est une vue en coupe longitudinale de la vanne selon l'invention en position fermée et comprenant le dispositif d'entrainement de la figure 7.

### Description détaillée de l'invention

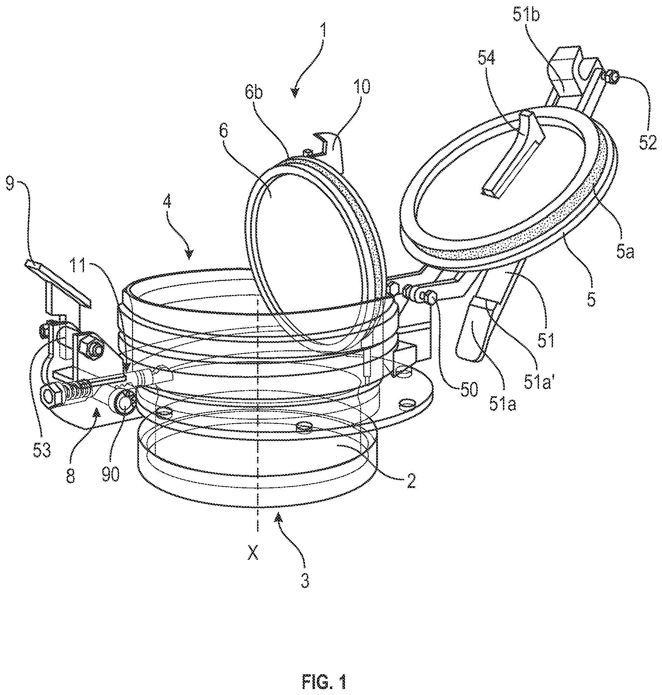

Une vanne 1 de vidange pour un aéronef (non représenté) est par exemple représenté sur la figure 1 en position ouverte. La vanne 1 est typiquement agencée dans un fuselage de l'aéronef. La vanne 1 permet par exemple d'obturer ou d'ouvrir un réservoir d'eaux usées de l'aéronef.

La vanne 1 comprend un corps 2 cylindrique. Le corps 2 s'étend selon un axe longitudinal X. Le corps 2 est par exemple réalisé dans un matériau métallique tel qu'un acier inoxydable. Le corps 2 est creux pour permettre la circulation des eaux usées dans la vanne 1. Le corps 2 présente un orifice d'entrée 3 et un orifice de sortie 4. L'orifice d'entrée 3 est destiné à être en communication fluidique avec le réservoir. L'orifice de sortie 4 est destiné à être relié à un dispositif de collecte et éventuellement d'aspiration (non représentés) des eaux usées.

La vanne 1 comprend en outre un premier clapet 5 et un second clapet 6. Le premier clapet 5 et le second clapet 6 sont mobiles en rotation ou en pivotement entre une position fermée et une position ouverte. Avantageusement, le premier clapet 5 et le second clapet 6 s'ouvrent dans le même sens. Dans l'exemple de réalisation de la figure 1, le premier clapet 5 et le second clapet 6 s'ouvrent vers l'extérieur par rapport au corps 2 de la vanne 1.

Le premier clapet 5 permet de renforcer l'étanchéité de la vanne 1. Lorsque la vanne 1 est fermée par le premier et le second clapets 5, 6, le premier clapet 5 recouvre le second clapet 6. Le premier clapet 5 est circulaire. Il comprend avantageusement une rainure annulaire périphérique dans laquelle est agencée un premier joint d'étanchéité 5a. Le premier clapet 5 est mobile en rotation autour d'un premier axe 50. Le premier axe 50 s'étend perpendiculairement à l'axe longitudinal X. Le premier axe 50 est avantageusement monté sur le corps 2 cylindrique.

Afin de faciliter l'ouverture et la fermeture du premier clapet 5, la vanne 1 comprend un levier principal 51 s'étendant sur le premier clapet 5. Le levier principal 51 présente une longueur supérieure au diamètre du premier clapet 5. Le levier principal 51 présente une première extrémité opposée au premier axe 50 par rapport à l'axe longitudinal X lorsque le premier clapet 5 est fermé et une seconde extrémité opposée à la première extrémité. Le levier principal 51 comprend une poignée 51a agencée sur la seconde extrémité, permettant à l'opérateur de saisir le premier clapet 5 et un crochet de verrouillage 51b agencé sur la première extrémité du levier principal 51. La poignée 51a comprend par exemple une surface interne présentant un ergot 51a' apte à coopérer avec le premier clapet 5 en position de fermeture pour verrouiller le levier principal 51. Le levier principal 51 est mobile en rotation autour d'un axe de levier 52 agencé sur la première extrémité. En position fermée du premier clapet 5, le crochet de verrouillage 51b coopère avec une tige de verrouillage 53 agencée sur le corps 2 cylindrique. La tige de verrouillage 53 s'étend perpendiculairement à l'axe longitudinal X et parallèlement au premier axe 50. La tige de verrouillage 53 est agencée à l'opposé du premier axe 50 par rapport à l'axe longitudinal X.

En outre, avantageusement, le premier clapet 5 comprend une came 54 s'étendant en saillie sur une surface interne du premier clapet 5. La came 54 est apte à coopérer avec le second clapet 6 lors de la fermeture du premier et du second clapet 5, 6.

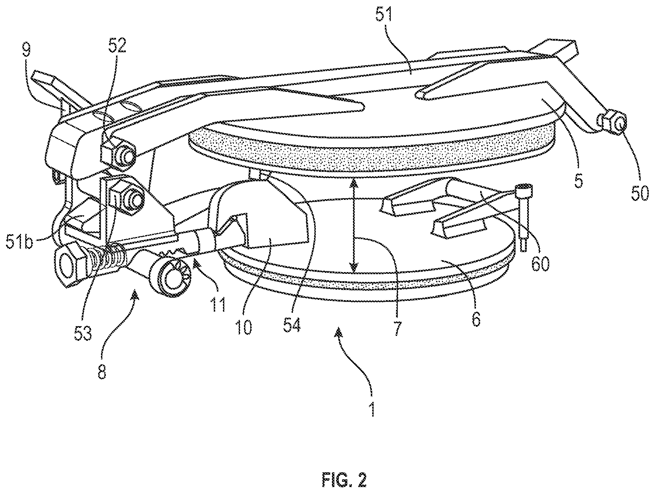

Le second clapet 6 forme une première barrière d'étanchéité de la vanne 1. Le second clapet 6 est destiné à être directement en contact avec les eaux usées du réservoir. Le second clapet 6 est agencé à l'intérieur du corps 2 cylindrique. En position fermée, le second clapet 6 est en contact avec les eaux usées. Le second clapet 6 est avantageusement circulaire. Le diamètre du second clapet 6 est inférieur au diamètre du premier clapet 5. Avantageusement, le second clapet 6 comprend une rainure annulaire périphérique dans laquelle est agencé un second joint d'étanchéité 6b. Comme mieux visible sur la figure 2 représentant la vanne 1 en position fermée sans le corps 2 cylindrique pour rendre visible les éléments situés dans le corps 2 cylindrique comme le second clapet 6, le second clapet 6 est mobile en rotation ou pivotement autour d'un second axe 60. Le second axe 60 s'étend parallèlement au premier axe 50 et est agencé à l'intérieur du corps 2 cylindrique.

Comme représenté sur la figure 2, lorsque le premier clapet 5 et le second clapet 6 sont fermés, la vanne 1 comprend avantageusement un espace intermédiaire 7 délimité par le premier clapet 5 et le second clapet 6. Avantageusement, le premier clapet 5 et le second clapet 6 sont entrainés en position de fermeture simultanément. Par exemple, le premier clapet 5 est apte à entrer en butée avec le second clapet 6 pour entrainer le second clapet 6 en position fermée.

En outre, la vanne 1 comprend un mécanisme de verrouillage 8 du second clapet 6 en position fermée. Le mécanisme de verrouillage 8 comprend un levier de commande 9 agencé autour d'un troisième axe 90, une interface 10 agencée sur le second clapet 6 et un dispositif d'entrainement 11 en rotation du troisième axe 90.

L'interface 10 présente une hauteur mesurée selon l'axe longitudinal X égale à la hauteur de l'espace intermédiaire 7. L'interface 10 s'étend en saillie sur une surface externe du second clapet 6. L'interface 10 est agencée dans l'espace intermédiaire 7. Ainsi, l'interface 10 coopère avec le premier clapet 5, en particulier avec la came 54, lors de la fermeture du premier et second clapet 5, 6 afin de faciliter l'entrainement du second clapet 6 par le premier clapet 5 en position fermée.

Le levier de commande 9 est mobile en rotation autour du troisième axe 90 entre une position de verrouillage et une position de déverrouillage. Dans la position de verrouillage, l'interface 10 est engagée dans le dispositif d'entrainement 11. Dans la position de déverrouillage, l'interface 10 est en butée contre le dispositif d'entrainement 11. En particulier, le levier de commande 9 est mobile en rotation selon une première direction dans la position de verrouillage et selon une seconde direction opposée à la première direction dans la position de déverrouillage. Lorsque le second clapet 6 est entrainé en position de fermeture, l'interface 10 entre en butée contre le dispositif d'entrainement 11 définissant la position de déverrouillage. Par butée, il est entendu que l'interface 10 est en appui sur le dispositif d'entrainement 11. La force exercée par l'interface 10 sur le dispositif d'entrainement 11 a pour effet d'entrainer en rotation le troisième axe 90 et le levier de commande 9 selon la deuxième direction. L'interface 10 est ensuite engagée, c'est à dire logée dans le dispositif d'entrainement 10 et n'exerce plus d'effort sur le dispositif d'entrainement 11 ce qui a pour effet d'entrainer en rotation le troisième 90 et le levier de commande 9 selon la première direction en position de verrouillage.

Le levier de commande 9 s'étend le long d'un axe parallèle à l'axe longitudinal X lorsque le second clapet 6 est fermé et verrouillé. Il présente une extrémité agencée autour du troisième axe 90 et une extrémité opposée libre. Préférentiellement, un joint d'étanchéité (non représenté) est agencé entre le levier de commande 9 et le troisième axe 90.

Le troisième axe 90 s'étend parallèlement au premier axe 50 et au second axe 60. Le troisième axe 90 est agencé dans une paroi montée sur le corps 2 cylindrique, à l'opposé du premier axe 50 et du second axe 60 par rapport à l'axe longitudinal X. Le troisième axe 90 présente une première extrémité libre sur laquelle est agencée le levier de commande 9 et une deuxième extrémité libre opposée à la première extrémité libre.

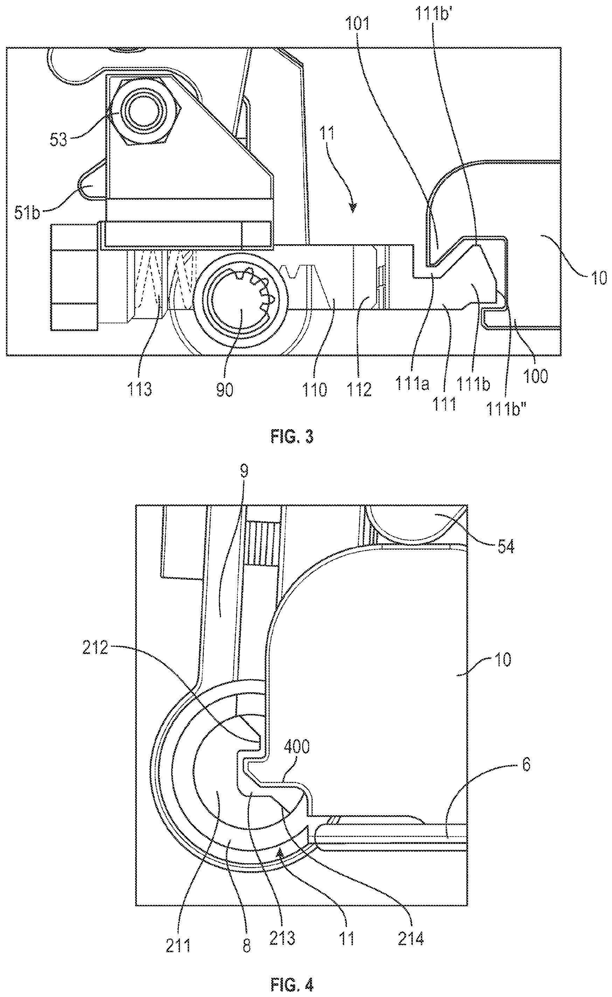

Selon la figure 3, le dispositif d'entrainement 11 comprend une crémaillère. La crémaillère s'étend selon un axe perpendiculaire au troisième axe 90 et à l'axe longitudinal X. La crémaillère comprend un corps cranté 110 coopérant avec le troisième axe 90 et une portion d'extrémité 111 apte à coopérer avec l'interface 10. Avantageusement, un troisième joint d'étanchéité 112 est agencé entre le corps cranté 110 et la portion d'extrémité 111. Plus particulièrement, la portion d'extrémité 111 comprend une encoche 111a dans laquelle l'interface 10 est apte à s'engager et une extrémité libre 111b avec laquelle l'interface 10 est apte à entrer en butée. L'extrémité libre 111b présente une première surface 111b' apte à entrer en butée avec un crochet 101 de l'interface 10 lors de l'ouverture du second clapet 6. L'extrémité libre 111b comprend en outre une seconde surface 111b" apte à entrer en butée avec une première surface complémentaire 100 de l'interface 10 lors de la fermeture du second clapet 6. Le crochet 101 est par ailleurs apte à s'engager dans l'encoche 111a lors de la fermeture et du verrouillage du second clapet 6.

Le dispositif d'entrainement 11 comprend avantageusement un ressort 113 agencé sur une extrémité de la crémaillère opposée à la portion d'extrémité 111.

Selon la figure 3, l'opérateur entraine le premier clapet 5 en rotation en position de fermeture entrainant le second clapet 6 en rotation en position fermée. Le levier principal 51 est alors verrouillé afin de verrouiller le premier clapet 5. Simultanément, l'interface 10 du second clapet 6 entre en butée avec l'extrémité libre 111b de la portion d'extrémité 111 de la crémaillère. Ceci a pour effet d'entrainer le corps principal 110 en translation dans un plan perpendiculaire à l'axe longitudinal X selon une première direction entrainant le troisième axe 90 en rotation. Le levier de commande 9 est alors entrainé en rotation dans la position de déverrouillage, selon la première direction. Par une force de rappel exercée par le ressort 113 sur le corps principal 110, la crémaillère est entrainée en translation selon une seconde direction opposée à la première direction. L'interface 10 s'engage alors dans l'encoche 111a verrouillant le second clapet 6 en position de verrouillage. Le troisième axe 90 est entrainé en rotation par la crémaillère, entrainant le levier de commande 9 en rotation dans la position de verrouillage, selon une seconde direction opposée à la première direction. Ceci peut également être réalisé par l'opérateur, si la force de rappel n'est pas suffisante notamment en cas de dépôts sur le second clapet 6.

Pour ouvrir le second clapet, l'opérateur actionne le levier de commande 9 selon la première direction pour entrainer en rotation le troisième axe 90. La crémaillère est alors entrainée en translation jusqu'à ce que la première surface 111b' de l'extrémité libre 111b de la portion d'extrémité 111 de la crémaillère vienne en butée contre le crochet 101 de l'interface 10. La force exercée sur l'interface 10 par la crémaillère permet d'entrainer le second clapet 6 en rotation pour l'ouvrir.

Selon un premier mode de réalisation représenté sur la figure 4, le dispositif d'entrainement 11 comprend une bague 211 solidaire du troisième axe 90. La bague 211 est avantageusement ménagée sur la deuxième extrémité du troisième axe 90 opposée au levier de commande 9. La bague 211 et le troisième axe 90 forment par exemple un corps monobloc.

La bague 211 présente une surface 212 avec laquelle l'interface 10 est apte à entrer en butée lors de la fermeture du second clapet 6 et une rainure 213 dans laquelle l'interface 10 est apte à s'engager lors du verrouillage.

Selon ce premier mode de réalisation, l'opérateur entraine le premier clapet 5 en rotation en position de fermeture entrainant le second clapet 6 en rotation en position fermée. Le levier principal 51 est alors verrouillé afin de verrouiller le premier clapet 5. Simultanément, l'interface 10 du second clapet 6 entre en butée avec la surface externe 212 de la bague 211. Ceci a pour effet d'entrainer la bague 211 en rotation selon une première direction entrainant le troisième axe 90 en rotation. Le levier de commande 9 est alors entrainé en rotation dans la position de déverrouillage, selon la première direction. La force exercée par l'opérateur permet à l'interface 10 de s'engager dans la rainure 213 de la bague 211 ce qui a pour effet d'entrainer la bague 211 en rotation selon une seconde direction opposée à la première direction. L'interface 10 est alors engagée dans la rainure 213 verrouillant le second clapet 6 en position de verrouillage. Le troisième axe 90 est simultanément entrainé en rotation, entrainant le levier de commande 9 en rotation dans la position de verrouillage, selon une seconde direction opposée à la première direction.

Pour ouvrir le second clapet, l'opérateur actionne le levier de commande 9 selon la première direction pour entrainer en rotation le troisième axe 90. La bague 211 est entrainée en rotation et une surface interne 214 entre en butée avec une surface complémentaire 400 de l'interface 10. La force exercée sur l'interface 10 par la bague 211 permet d'entrainer le second clapet 6 en rotation pour l'ouvrir.

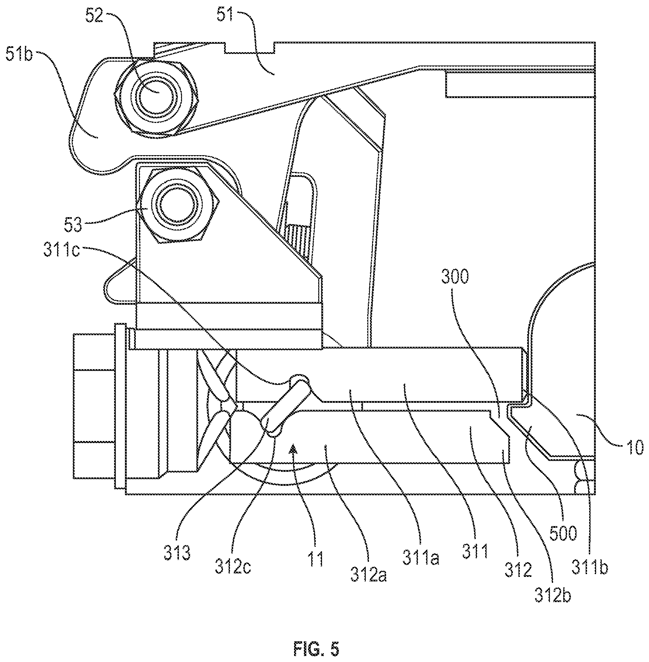

Selon la figure 5, le dispositif d'entrainement 11 comprend un premier vérin 311 présentant un premier corps cylindrique 311a et une première extrémité libre 311b apte à coopérer avec l'interface 10, et un second vérin 312 présentant un second corps cylindrique 312a et une seconde extrémité libre 312b apte à coopérer avec l'interface 10, le troisième axe 90 étant engagé dans le premier et le second corps cylindrique 311a, 312a. Préférentiellement, la seconde extrémité libre 312b est biseautée. Le premier vérin 311 et le deuxième vérin 312 sont avantageusement parallèles. Ils s'étendent en outre selon un axe perpendiculaire au troisième axe 90 et à l'axe longitudinal X. Avantageusement, l'extrémité libre du troisième axe 90 comprend un tenon 313. Le premier corps cylindrique 311a présente un premier logement 311c et le second corps cylindrique 312a présente un second logement 312c, le tenon 313 étant engagé dans le premier et le second logement 311c, 312c. Selon la figure 5, l'opérateur entraine le premier clapet 5 en rotation en position de fermeture entrainant le second clapet 6 en rotation en position fermée. Le levier principal 51 est alors verrouillé afin de verrouiller le premier clapet 5. Simultanément, l'interface 10 du second clapet 6 entre en butée avec l'extrémité libre 311b du premier vérin 311. Ceci a pour effet d'entrainer le premier vérin 311 en translation selon une première direction entrainant le tenon 313 en rotation dans le premier et second logement 311c, 312c et ainsi le troisième axe 90 en rotation. Le levier de commande 9 est alors entrainé en rotation dans la position de déverrouillage, selon la première direction. La force exercée par l'opérateur permet à l'interface 10 de s'insérer entre le premier vérin 311 et le second vérin 312. Pour ouvrir le second clapet, l'opérateur actionne le levier de commande 9 selon la première direction pour entrainer en rotation le troisième axe 90. Le tenon 313 est entrainé en rotation dans chaque logement 311c, 312c. Ceci a pour effet d'entrainer le second vérin 312 en translation. L'extrémité libre 312b du second vérin 312 entre en butée avec l'interface 10. Avantageusement, l'interface 10 présente une extrémité libre 500 présentant une surface de forme complémentaire à l'extrémité libre 312b biseautée pour faciliter la coopération avec l'extrémité libre 312b du second vérin 312. La force exercée sur l'interface 10 par le second vérin 312 permet d'entrainer le second clapet 6 en rotation pour l'ouvrir.

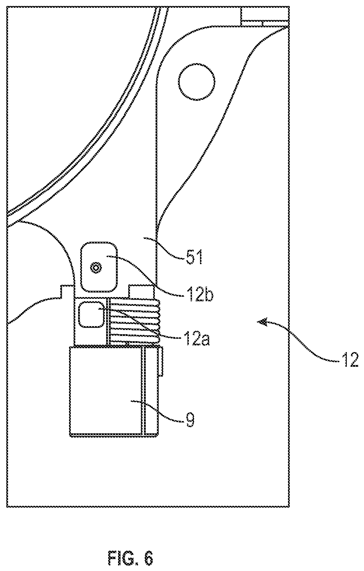

Comme représenté à titre d'exemple sur la figure 6, avantageusement, la vanne 1 comprend un indicateur de verrouillage 12 du second clapet 6.

L'indicateur de verrouillage 12 est agencé sur le levier de commande 9 et sur le levier principal 51. L'indicateur de verrouillage 12 comprend par exemple un premier marqueur visuel 12a agencé sur le levier de commande 9 et second un marqueur visuel 12b agencé sur le levier principal 51. En position fermée et de verrouillage du second clapet 6, les marqueurs visuels 12a, 12b sont alignés. Ceci permet de renforcer la fiabilité du verrouillage du second clapet 6.

Un procédé d'ouverture de la vanne 1 va maintenant être décrit.

Le procédé d'ouverture de la vanne 1 comprend une première étape (a) d'ouverture du premier clapet 5. L'ouverture dans l'étape (a) se fait selon les sous étapes suivantes :
(a1) déverrouiller le levier principal 51, et
(a2) entrainer en rotation le premier clapet 5.

Puis, une étape (b) d'ouverture du second clapet 6 est réalisée. L'ouverture se fait selon la sous étape suivante :
(b1) entrainer en rotation le levier de commande 9 selon la première direction. Ceci a pour effet d'entrainer le dispositif d'entrainement 11 et de désengager l'interface 10 du dispositif d'entrainement 11. Une fois l'interface 10 libérée du dispositif d'entrainement 11, le levier de commande 9 est entrainé revient dans la seconde direction.

Un procédé de verrouillage du second clapet 6 va maintenant être décrit. Ce procédé comprend les étapes suivantes :
(a') fermer le second clapet 6,
(b') entrainer en rotation le levier de commande 9 dans la position de déverrouillage, préférentiellement selon la première direction, et dans laquelle l'interface 10 est en butée contre le dispositif d'entrainement 11,
(c') entrainer en rotation le levier de commande 9 dans la position de verrouillage, préférentiellement selon la seconde direction opposée à la première, et dans laquelle l'interface 10 est engagée dans le dispositif d'entrainement 11.

L'étape (a') comprend avantageusement la sous étape (a1') d'entrainement en rotation du premier clapet 5 et du second clapet 6 par le premier clapet 5. Cette sous étape est par exemple réalisée en entrainant en rotation le levier principal 51.

Puis une sous étape (a2') de verrouillage du premier clapet 5 est réalisée en verrouillant le levier principal 51.

Le premier clapet 5 et le second clapet 6 sont alors fermés et verrouillés.

Ainsi, selon l'invention, il est possible de fermer et verrouiller le second clapet 6 de manière fiable puisque le levier de commande 9 est mobile en rotation dans deux directions opposées indiquant le bon verrouillage du second clapet 6. En outre, en cas de dépôt empêchant la fermeture correcte du second clapet 6 et donc le retour en rotation du levier de commande 9 selon la deuxième direction, en position de verrouillage, l'opérateur peut opérer directement le levier de commande 9 et forcer le levier de commande 9 dans la position de verrouillage. Ceci améliore encore plus la fiabilité du mécanisme de verrouillage 8 du second clapet 6.

Selon l'invention, le levier de commande 9 est agencé autour du troisième axe 90 et est solidaire en rotation du troisième axe 90.

Selon l'invention, le second clapet 6 est mobile en rotation entre trois positions. Une première position d'ouverture. Une deuxième position de fermeture déverrouillée et une troisième position de fermeture verrouillée.

Selon l'invention, le dispositif d'entrainement 11 est quant à lui mobile entre deux états. Lorsque le second clapet 6 est dans la deuxième position, le dispositif d'entrainement 11 est dans le premier état. Lorsque le second clapet 6 est dans la troisième position, le dispositif d'entrainement 11 est dans le second état. Lorsque le second clapet 6 est dans la première position d'ouverture, le dispositif d'entrainement 11 est dans le second état.

Dans le premier état du dispositif d'entrainement 11 associé à la deuxième position du second clapet 6, l'interface 10 est en butée contre le dispositif d'entrainement 11.

Dans le second état du dispositif d'entrainement 11 associé à la troisième position du second clapet 6, l'interface 10 est engagée dans le dispositif d'entrainement 11.

Dans le second état du dispositif d'entrainement 11 associé à la première position du second clapet 6, comme visible sur la figure 1, l'interface 10 ne coopère pas avec le dispositif d'entrainement 11.

Dans le cadre de la fermeture du second clapet 6, le dispositif d'entrainement 11 entraine en rotation le troisième axe 90 entrainant en rotation le levier de commande 9 qui est solidaire en rotation du troisième axe 90. Le mécanisme de verrouillage 8 de l'invention est réversible. Ceci permet l'ouverture du second clapet 6. Dans le cadre de l'ouverture du second clapet 6, le levier de commande 9 entraine en rotation le troisième axe 90 et entraine le dispositif d'entrainement 11 qui coopère avec l'interface 10 pour ouvrir le second clapet 6.

Le dispositif d'entrainement 11 coopère avec le troisième axe 90 et l'interface 10. Plus particulièrement, dans tous les exemples de réalisation, l'interface 10 comprend un crochet 101 apte à s'engager dans un logement du dispositif d'entrainement 11 lorsque le second clapet 6 est en position fermée et verrouillée. Dans la figure 3, le logement est formé par l'encoche 111a.

Dans le premier exemple de réalisation, le logement est formé par la rainure 213.

Dans la figure 5, le logement est formé par un espace 300 délimité par les extrémités libres 311b, 312b des premier et second vérins 311, 312. En position de verrouillage du levier de commande 9, l'extrémité libre 311b du premier vérin 311 est décalée radialement par rapport à l'extrémité libre 312b du second vérin 312 formant ainsi l'espace 300.

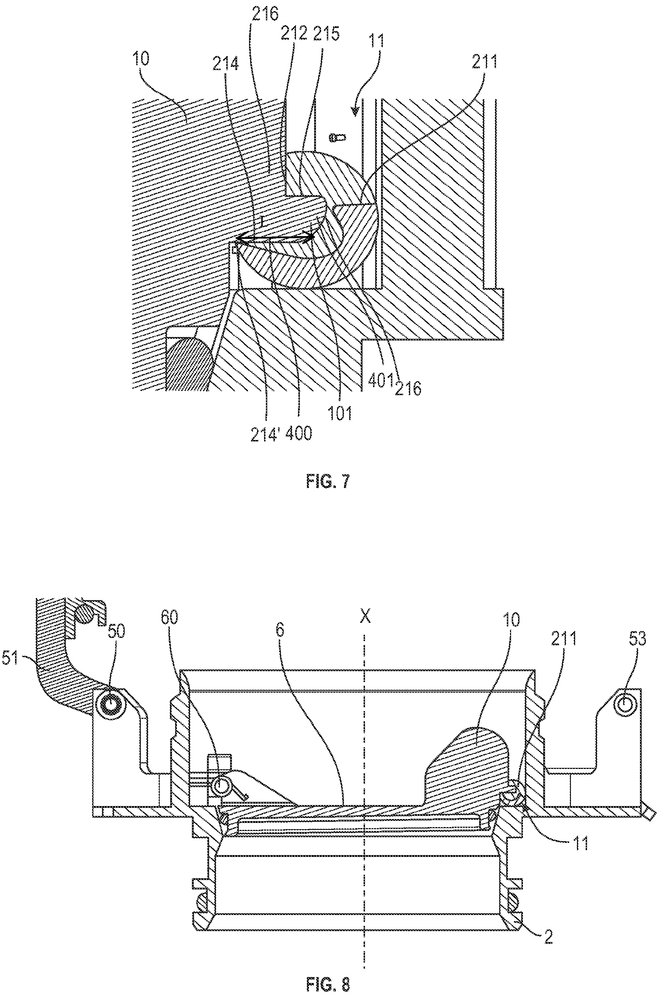

Selon un deuxième exemple de réalisation représenté sur les figures 7 et 8, le dispositif d'entrainement 11 comprend la bague 211. La bague 211 est logée dans le corps 2 de la vanne 1. La bague 211 est solidaire du troisième axe 90 comme dans le deuxième exemple de réalisation représenté sur la figure 4. Le troisième axe 90 est donc logé dans le corps 2.

La bague 211 présente une forme de C. La bague 211 présente la surface 212, appelée également première surface 212 avec laquelle l'interface 10 est apte à entrer en butée pour la fermeture du second clapet 6. La bague 211 comprend également la rainure 213 dans laquelle l'interface 10 est apte à s'engager, notamment via le crochet 101. La bague 211 présente en outre la surface interne 214, également appelée deuxième surface 214 avec laquelle l'interface 10 est apte à entrer en butée lors de l'ouverture du second clapet 6.

La deuxième surface 214 est perpendiculaire à la première surface 212. La bague 211 comprend en outre une troisième surface interne 215 parallèle à la deuxième surface 214 et reliée à la première surface 212. La troisième surface interne 215 est reliée à la deuxième surface 214 par une surface interne arrondie 216.

Le crochet 101 présente une forme complémentaire à la bague 211. Le crochet 101 comprend la surface complémentaire 400 à la deuxième surface 214 et une portion arrondie 401 complémentaire à la surface arrondie 216. La portion arrondie 401 est en saillie. La portion arrondie 401 est logée dans la rainure 213 en position de verrouillage.

Pour la fermeture, le crochet 101, et notamment la portion arrondie 401, entre en butée avec la première surface 212 ce qui entraine en rotation le levier de commande 9 dans sa position de déverrouillage. Le crochet 101, et notamment la portion arrondie 401, est ensuite logée dans la rainure 213 ce qui entraine en rotation le levier de commande 9 dans sa position de verrouillage.

La bague 211 présente une extrémité pointue 214' qui permet de faciliter l'ouverture du second clapet 6 via l'interface 10 lors de l'actionnement du levier de commande 9 pour son ouverture. L'extrémité pointue 214' entre en butée avec la surface complémentaire 400 de l'interface 10 permettant d'entrainer en rotation le second clapet 6 pour son ouverture avec un effet de levier. Plus particulièrement, la deuxième surface 214 est reliée à une surface externe 216 de la bague 211 par une arrête formant l'extrémité pointue 214'.

La distance L entre le centre de la bague 211 et l'extrémité pointue 214' et telle que mesurée radialement par rapport à l'axe longitudinal X est comprise entre 2 mm et 5 mm, préférentiellement comprise entre 3 mm et 3.5 mm. Une telle distance L permet d'exercer un effet de levier suffisant pour forcer l'ouverture du second clapet 6 par exemple en cas de dépôts, tels que de la glace, empêchant l'ouverture du second clapet 6.

## Revendications

1. Vanne (1) de vidange pour aéronef comprenant :
un corps (2) cylindrique présentant un orifice d'entrée (3) et un orifice de sortie (4),
un premier clapet (5),
un second clapet (6) agencé à l'intérieur du corps (2), le premier et le second clapets (5, 6) étant mobiles en rotation autour respectivement d'un premier axe (50) et d'un second axe (60), entre une position fermée et une position ouverte,
un mécanisme de verrouillage (8) du second clapet (6) dans la position fermée comprenant :
- un levier de commande (9) agencé autour d'un troisième axe (90),
- une interface (10) agencée sur le second clapet (6) et
- un dispositif d'entrainement (11) en rotation du troisième axe (90), le levier de commande (9) étant solidaire en rotation du troisième axe (90) entre
une position de déverrouillage dans laquelle l'interface (10) est en butée contre le dispositif d'entrainement (11) et une position de verrouillage dans laquelle l'interface (10) est engagée dans le dispositif d'entrainement (11), le dispositif d'entrainement (11) comprenant une bague (211) solidaire du troisième axe (90) et présentant une surface (212) avec laquelle l'interface (10) est apte à entrer en butée et une rainure (213) dans laquelle l'interface (10) est apte à s'engager, **caractérisé en ce que** la bague (211) comprend une extrémité pointue (214') apte à entrer en butée avec une surface complémentaire (400) de l'interface (10) lors de l'ouverture du second clapet (6).

2. Vanne selon la revendication précédente, **caractérisée en ce que** le troisième axe (90) est agencé dans une paroi montée sur le corps (2) cylindrique de la vanne (1) à l'opposé du premier et du second axes (50, 60) par rapport à un axe longitudinal (X) du corps (2) cylindrique.

3. Vanne selon l'une quelconque des revendications précédentes, **caractérisée en ce qu'**elle comprend un levier principal (51) s'étendant sur le premier clapet (5) apte à entrainer le premier clapet (5) et le second clapet (6) de la position ouverte à la position fermée.

4. Vanne selon l'une quelconque des revendications précédentes, **caractérisée en ce que** la bague (211) présente une surface interne (214) apte à entrer en butée avec la surface complémentaire (400) de l'interface (10) lors de l'ouverture du second clapet (6), la surface interne (214) étant reliée à une surface externe (216) de la bague (211) par une arrête formant l'extrémité pointue (214').

5. Vanne selon l'une quelconque des revendications précédentes, **caractérisée en ce que** le levier de commande (9) est mobile en rotation dans la position de déverrouillage selon une première direction et dans la position de verrouillage selon une seconde direction opposée à la première direction.

6. Procédé de verrouillage d'un second clapet (6) d'une vanne (1) selon l'une quelconque des revendications précédentes, comprenant les étapes suivantes :
(a') fermer le second clapet (6),
(b') entrainer en rotation le levier de commande (9) dans la position de déverrouillage dans laquelle l'interface (10) est en butée contre le dispositif d'entrainement (11),
(c') entrainer en rotation le levier de commande (9) dans la position de verrouillage dans laquelle l'interface (10) est engagée dans le dispositif d'entrainement (11).

## Patentansprüche

1. Ablassventil (1) für ein Luftfahrzeug, umfassend:
einen zylindrischen Körper (2), der eine Einlassöffnung (3) und eine Auslassöffnung (4) aufweist,
eine erste Klappe (5),
eine zweite Klappe (6), angeordnet im Inneren des Körpers (2), wobei die erste und die zweite Klappe (5, 6) jeweils zwischen einer geschlossenen Position und einer offenen Position um eine erste Achse (50) und eine zweite Achse (60) herum drehbeweglich sind,
einen Verriegelungsmechanismus (8) der zweiten Klappe (6) in der geschlossenen Position, umfassend:
- einen Steuerhebel (9), der um eine dritte Achse (90) herum angeordnet ist,
- eine auf der zweiten Klappe (6) angeordnete Schnittstelle (10) und
- eine Vorrichtung zum Drehantrieb (11) der dritten Achse (90),
wobei der Steuerhebel (9) zwischen einer Entriegelungsposition, in der die Schnittstelle (10) gegen die Antriebsvorrichtung (11) in Anlage vorliegt, und einer Verriegelungsposition, in der die Schnittstelle (10) mit der Antriebsvorrichtung (11) in Eingriff vorliegt, mit der dritten Achse (90) drehfest ist, wobei die Antriebsvorrichtung (11) einen mit der dritten Achse (90) fest verbundenen Dichtungsring (211) umfasst und eine Oberfläche (212) aufweist, mit der die Schnittstelle (10) in Anlage kommen kann, und eine Aussparung (213), mit der die Schnittstelle (10) in Eingriff kommen kann, **dadurch gekennzeichnet, dass** der Dichtungsring (211) ein spitzes Ende (214') umfasst, das bei dem Öffnen der zweiten Klappe (6) mit einer komplementären Oberfläche (400) der Schnittstelle (10) in Anlage kommen kann.

2. Ventil nach dem vorstehenden Anspruch, **dadurch gekennzeichnet, dass** in Bezug auf eine Längsachse (X) des zylindrischen Körpers (2) die dritte Achse (90) in einer an dem zylindrischen Körper (2) des Ventils (1) montierten Wand gegenüber der ersten und zweiten Achse (50, 60) angeordnet ist.

3. Ventil nach einem der vorstehenden Ansprüche, **dadurch gekennzeichnet, dass** es einen Haupthebel (51) umfasst, der sich auf der ersten Klappe (5) erstreckt, der die erste Klappe (5) und die zweite Klappe (6) von der offenen Position in die geschlossene Position antreiben kann.

4. Ventil nach einem der vorstehenden Ansprüche, **dadurch gekennzeichnet, dass** der Dichtungsring (211) eine interne Oberfläche (214) aufweist, die bei dem Öffnen der zweiten Klappe (6) mit der komplementären Oberfläche (400) der Schnittstelle (10) in Anlage kommen kann, wobei die interne Oberfläche (214) mit einer externen Oberfläche (216) des Dichtungsrings (211) durch eine Kante, die das spitze Ende (214') bildet, verbunden ist.

5. Ventil nach einem der vorstehenden Ansprüche, **dadurch gekennzeichnet, dass** der Steuerhebel (9) in der Entriegelungsposition gemäß einer ersten Richtung und in der Verriegelungsposition gemäß einer zweiten Richtung, entgegengesetzt zu der ersten Richtung, beweglich ist.

6. Verfahren zur Verriegelung einer zweiten Klappe (6) eines Ventils (1) nach einem der vorstehenden Ansprüche, umfassend die folgenden Schritte:
(a') Schließen der zweiten Klappe (6),
(b') Drehantreiben des Steuerhebels (9) in die Entriegelungsposition, in der die Schnittstelle (10) gegen die Antriebsvorrichtung (11) in Anlage vorliegt,
(c') Drehantreiben des Steuerhebels (9) in die Verriegelungsposition, in der die Schnittstelle (10) mit der Antriebsvorrichtung (11) in Eingriff vorliegt.

## Claims

1. A discharge valve (1) for an aircraft comprising:
a cylindrical body (2) having an inlet orifice (3) and an outlet orifice (4),
a first flap (5),
a second flap (6) arranged inside the body (2), the first and second flaps (5, 6) being mobile in rotation about a first axle (50) and a second axle (60) respectively, between a closed position and an open position,
a mechanism (8) for locking the second flap (6) in the closed position comprising:
- a control lever (9) arranged around a third axle (90),
- an interface (10) arranged on the second flap (6) and
- a drive device (11) for rotating the third axle (90),
the control lever (9) being secured in rotation with the third axle (90) between an unlocking position in which the interface (10) is in abutment against the drive device (11) and a locking position in which the interface (10) is engaged in the drive device (11),
the drive device (11) comprising a ring (211) secured to the third axle (90) and having a surface (212) with which the interface (10) can come into abutment and a groove (213) in which the interface (10) can be engaged,
**characterised in that** the ring (211) comprises a pointed end (214') adapted to come into abutment with the complementary surface (400) when the second flap (6) opens.

2. The valve according to the preceding claim, **characterised in that** the third axle (90) is arranged in a wall mounted on the cylindrical body (2) of the valve (1) opposite the first and second axles (50, 60) with respect to a longitudinal axis (X) of the cylindrical body (2).

3. The valve according to any one of the preceding claims, **characterised in that** it comprises a main lever (51) extending over the first flap (5) adapted to drive the first flap (5) and the second flap (6) from the open position to the closed position.

4. The valve according to any one of the preceding claims, **characterised in that** the ring (211) has an internal surface (214) adapted to come into abutment with the complementary surface (400) of the interface (10) when the second flap (6) is opened, the internal surface (214) being connected to an external surface (216) of the ring (211) by an edge forming the pointed end (214').

5. The valve according to any of the preceding claims, **characterised in that** the control lever (9) is mobile in rotation in the unlocking position in a first direction and in the locking position in a second direction opposite to the first direction.

6. A method of locking a second flap (6) of a valve (1) according to any of the preceding claims, comprising the following steps of:
(a') closing the second flap (6),
(b') rotating the control lever (9) into the unlocked position in which the interface (10) comes into abutment with the drive device (11),
(c') rotating the control lever (9) into the locking position in which the interface (10) is engaged with the drive device (11).
